# EUROPEAN PATENT SPECIFICATION

(11) **EP 2 488 286 B1**
(45) Date of publication and mention of the grant of the patent: **21.11.2018**
(21) Application number: 10823946.8
(22) Date of filing: 12.10.2010
(51) Int. Cl.: B01D 63/12, F16J 15/04

(54) **AXIAL LABYRINTH SEAL FOR SPIRAL WOUND MEMBRANE MODULE SYSTEMS**
AXIALLABYRINTHDICHTUNG FÜR MEMBRANSYSTEME MIT SPIRALWICKELMODULEN
JOINT À LABYRINTHE AXIAL POUR DES SYSTÈMES DE MODULES A MEMBRANES SPIRALEES

(30) Priority: 12.10.2009 US 250765 P; 12.10.2009 US 250771 P
(43) Date of publication of application: 22.08.2012
(73) Proprietor: Toray Industries, Inc., Tokyo 103-8666 (JP)
(72) Inventor: LESAN, Frederick, K., Encinitas CA 92024 (US); ELWELL, Curtis, J., El Cajon CA 92021 (US)
(74) Representative: Hoefer & Partner Patentanwälte mbB
(86) International application number: PCT/US2010/052330
(87) International publication number: WO 2011/046937

(56) References cited:
- WO-A1-03/002228
- WO-A1-2007/072897
- US-A- 5 851 267
- US-A1- 2003 024 868
- US-B2- 7 387 731

## Description

### BACKGROUND OF THE INVENTION

### Field of the Invention

The present invention relates generally to membrane filtration systems and more particularly to seals used in spiral membrane elements of filtration systems.

### Description of Related Art

Certain types of filtration systems used for removing chemical contaminants and organisms from water comprise one or more filtration elements that are sealed within an enclosure. The enclosure may comprise a canister, a drum and/or a pipe.

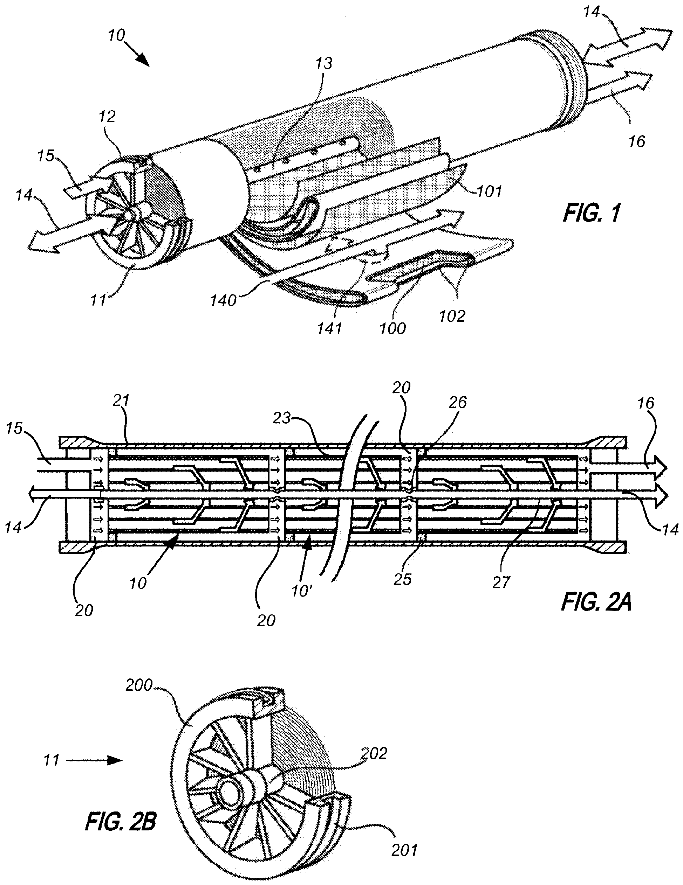

In particular, filtration systems used for large-scale water treatment can include a series of elements that connect together within a pipe like structure and which direct an inflow of contaminated or impure water through a filter material and onto an outflow pipe or channel. In the example shown in Fig. 1, filtration element 10 in a spiral membrane filtration system comprises a membrane structure that is wound in a spiral. In Fig. 1, permeate carrier sheet 100 is laminated within an envelope of a membrane filtration sheet 102 and adjacent layers are separated by feed spacers 101 and typically enclosed within a hard shell or wrapping to prevent leakage of the inflow and to provide a degree of mechanical stability and strength to filtration element 10. Filtration elements, such as spiral membrane filtration element 10, are typically provided in a substantially cylindrical form and one or more filtration elements 10 and 10' can be installed end-on-end within a housing 21 (as shown in Fig. 2A). An inflow fluid 15 is introduced through an inlet under pressure into an end of the system, and enters filtration element 10 at one end 15 and, having passed through membrane 102, exits either as a permeate stream 14, typically through a center pipe or channel 13, or as a concentrate stream 16 which exits from the membrane filtration device. The center pipe is typically coaxial with the enclosure 21 and coupled or otherwise connected with the membrane 102 in a manner that permits collection of the permeate 14. Permeate 14 can be drawn from the system in either direction.

These filtration elements function as membrane filters. Unlike conventional batch mode filtration systems, the described filtration system operates as continuous steady state process. As such the total of all material entering in the feed stream 15 is substantially equal to the summation of all material leaving the filtration device in the two exit streams 14 and 16. Such systems may be used in applications that deliver drinking water, clean or treat wastewater and/or storm water, extract water from sludge, and/or desalinate water such as sea water; in these applications, the dilute permeate stream 14 is the principal product of the system. Conversely the concentrate stream 16 may provide the principal product where the objective is to recover or concentrate a valuable solute.

Spiral membrane elements 10 are used as a means of packaging flat sheet, reverse osmosis membrane 102 in useful separation applications. These elements are typically loaded end to end in a cylindrical housing 21 as shown in Fig. 2A. Process feed flow 15 is introduced at one end of the housing and flows axially 140 through the element 10, with some portion 141 passing through the filter medium 102 to a center collection channel or pipe system 13 from which it is provided as an outflow 14. The concentrated remnant 16 is drawn from a first element 10 into a second element 10' and so on. Concentrate 16 extracted from the system can be processed externally and/or recycled through the system based on system configuration and function. It is necessary to provide a sealing mechanism between successive spiral elements 10 and 10' that insures concentrate stream 16 from the first element 10 is passed as a feed stream 15 to the subsequent spiral membrane filtration element 10'.

This sealing mechanism can be accomplished using seal plates 11 (shown in more detail in Fig. 2B) that are attached to each end of each spiral element 10 and 10'. In conventional systems, elastomeric seals are placed in a groove 201 located on an external edge of seal plate 11, in order to prevent escape of fluid into a space between element 10 or 10' and housing or vessel 21. Couplings 202 connect successive center channels 13 are typically also sealed using elastomeric seals.

US 5 851 267 A discloses setting a joint portion at the annular outlet of a spiral type membrane element and forming seal-connecting by compressing O-ring with rotating adjacent annular outlets mutually. WO 2007/072897 A1 discloses that each connection mechanism (J) has a movable member (M) at either the upstream side or the downstream side end of each membrane element and has an engagement part (9d) engageable with each other. US 2003/024868 A1 discloses setting a joint portion comprising inner hub 36 and outer hub 48 at the end cap 34 of a spiral type membrane element and connecting adjacent separation elements by locking structure on the joint portion.

### BRIEF SUMMARY OF THE INVENTION

The invention relates to a system of two spiral membrane elements with seal plates according to claim 1. A seal can be formed using a first seal plate for capping the first spiral membrane element and having a substantially planar facing configured to engage a corresponding face of a second seal plate of the second spiral membrane element. The faces of the first and second seal plates have complementary patterns extending radially along the axial surfaces of the seal plate and the second seal plate such that the complementary patterns yield an intermeshed contact of the seal plates when the spiral membrane element is coupled to the adjacent spiral membrane element. The intermeshed contact creates a tortuous flow path from inside the spiral membrane element to the outside of the spiral membrane element, thereby sealing the spiral membrane element at the point of coupling with the adjacent spiral membrane element. Resistance to flow through the seal can be increased and, consequently, the degree of leakage allowed by the seal in operation can be reduced by making the tortuous path more labyrinthine.

Thus, the intermeshed contact may produce a path that has multiple turns, corners, steps, and so on. For example, an intermeshed contact can be formed using complementary stepped surfaces of the spiral membrane element and the adjacent spiral membrane element. The stepped profiles may be formed with right angled edges for one or more steps and/or the profiles may be v-shaped in form.

According to certain aspects of the invention a plurality of the spiral membrane elements can be connected sequentially within a cylindrical housing, with the feed end of the cylindrical housing being sealed with a radial seal. A radial seal can be provided by an annular element installed in a groove of a seal plate.

According to certain aspects of the invention, the spiral membrane element can be coupled to more adjacent spiral membrane elements using the seal plates described herein. Coupling can be maintained by a latching mechanism. In one example, the latching mechanism comprises a pawl that is provided on the spiral membrane element and a receiving groove provided on the adjacent spiral membrane element. The latching mechanism is typically engaged before the spiral membrane element and the adjacent spiral membrane element are inserted into the cylindrical housing. The latching mechanism may be configured such that the cylindrical housing
prevents disengagement of the latching mechanism while the coupling between adjacent spiral membrane elements remains within the cylindrical housing.

### BRIEF DESCRIPTION OF THE DRAWINGS

Fig. 1 illustrates a spiral membrane filtration element used in filtration systems.
Figs. 2A and 2B illustrate a filtration system having a plurality of filtration elements.
Fig. 3 illustrates a seal plate and an intermeshing surface of the face of the seal plate according to certain aspects of the invention.
Fig. 4 illustrates certain aspects of seal plates employed in embodiments of the invention.
Fig. 5 illustrates axial seal profiles in certain embodiments of the invention.
Fig. 6A illustrates seal plate latching mechanisms provided according to certain aspects of the invention.
Fig. 6B illustrates placement of spacers on a seal plate in certain embodiments of the invention.
Figs. 7A and 7B illustrate examples of axial seal profiles according to certain aspects of the invention.
Fig. 8 illustrates examples of a band of texture provided on a seal plate according to certain aspects of the invention.
Figs. 9A and 9B illustrate symmetric configurations of texture patterns provided in a band of texture according to certain aspects of the invention.

### DETAILED DESCRIPTION OF THE INVENTION

Embodiments of the present invention will now be described in detail with reference to the drawings, which are provided as illustrative examples so as to enable those skilled in the art to practice the invention. Notably, the figures and examples below are not meant to limit the scope of the present invention to a single embodiment, but other embodiments are possible by way of interchange of some or all of the described or illustrated elements. Wherever convenient, the same reference numbers will be used throughout the drawings to refer to same or like parts. Where certain elements of these embodiments can be partially or fully implemented using known components, only those portions of such known components that are necessary for an understanding of the present invention will be described, and detailed descriptions of other portions of such known components will be omitted so as not to obscure the invention. In the present specification, an embodiment showing a singular component should not be considered limiting; rather, the invention is intended to encompass other embodiments including a plurality of the same component, and vice-versa, unless explicitly stated otherwise herein. Moreover, applicants do not intend for any term in the specification or claims to be ascribed an uncommon or special meaning unless explicitly set forth as such.

Certain embodiments of the invention provide systems, apparatus and methods for providing axial seals in membrane filtration systems. In one example, membrane filtration systems can be adapted according to certain aspects of the invention such that pairs of adjacent spiral elements 10, 10' are sealed using an axial seal typically located on one or more faces 200 of a seal plate 11 shown in Fig. 2B. Although the axial face seals described herein may be provided on a surface surrounding coupling 202 for center channel 13, this description will be directed primarily to an axial face seal provided on an annular surface 200 toward the outer edge of seal plate 11 for the purpose of simplifying descriptions. The use of axial face seals can ease installation and maintenance of filtration systems by reducing the number of radial seals required for constructing multi-element systems. Consequently, the force required to install and remove spiral elements 10 and 10' can be greatly reduced. Moreover, certain seals provided according to certain aspects of the invention eliminate the need for elastomeric seals coupled to the face of seal plates.

The invention employs plural spiral elements, including elements 10 and 10', which are joined in series to provide a desired "column length" of filtration elements 10 and 10' using seal plates 32. The seal plates operate to couple adjacent filtration elements 10 and 10' and are bonded or otherwise fixed to a filtration core. Typically, the plates of the pair of complementary seal plates are fixed to opposite ends of a filtration element 10. The filtration elements can be assembled by matching complementary ends of adjacent filtration elements 10 and 10'.

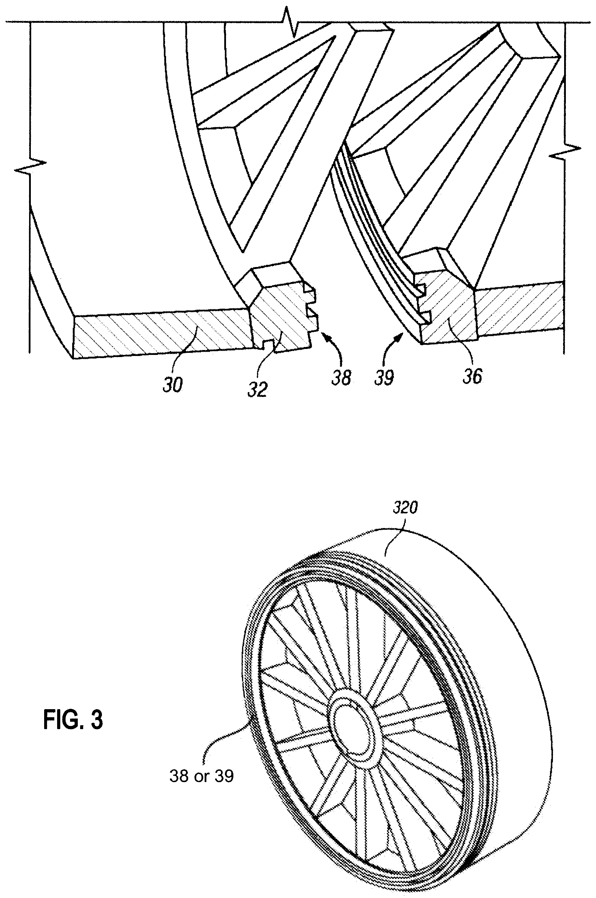

The spiral elements 10 and 10' are typically fitted within a cylindrical housing 21 and are joined to one another inside the housing 21. Fig. 3 depicts intermeshing surfaces 38 and 39 on facing surfaces of adjacent seal plates 32 and 36, respectively. In the example of Fig. 3, each joining of two spiral elements 10 and 10' includes an axial seal on a surface of seal plates 32 and 36 as an alternative to radial seals that make contact with an inner surface of housing 21. Accordingly, certain embodiments of the present invention need only provide a radial seal 25 at the entry of process feed flow 14 to the first spiral element 10. It will be appreciated that other radial seals 25 may be added downstream and/or at the exit point of the feed flow. The radial seals 25 direct a feed flow introduced to the housing into the internal structure of the first spiral element 10 and thence to other spiral elements (e.g. element 10') in the column. Spiral elements are placed end to end within the housing 21. Sealing between spiral elements 10 and 10' can be achieved using seal plates 32 and 36 constructed according to certain aspects of the invention. Seal plates 32 and 36 may be considered to be end plates attached to spiral elements 10 and 10', respectively.

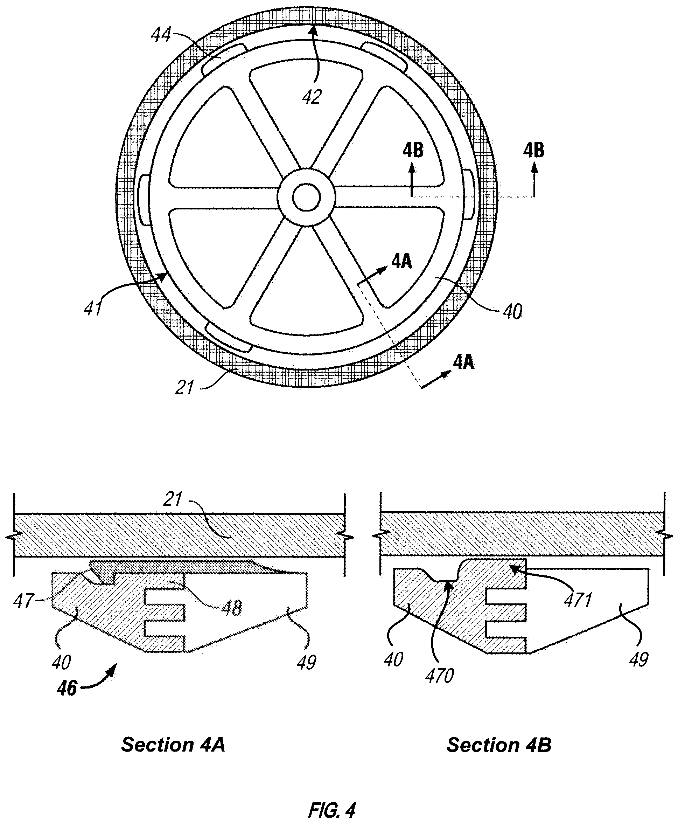

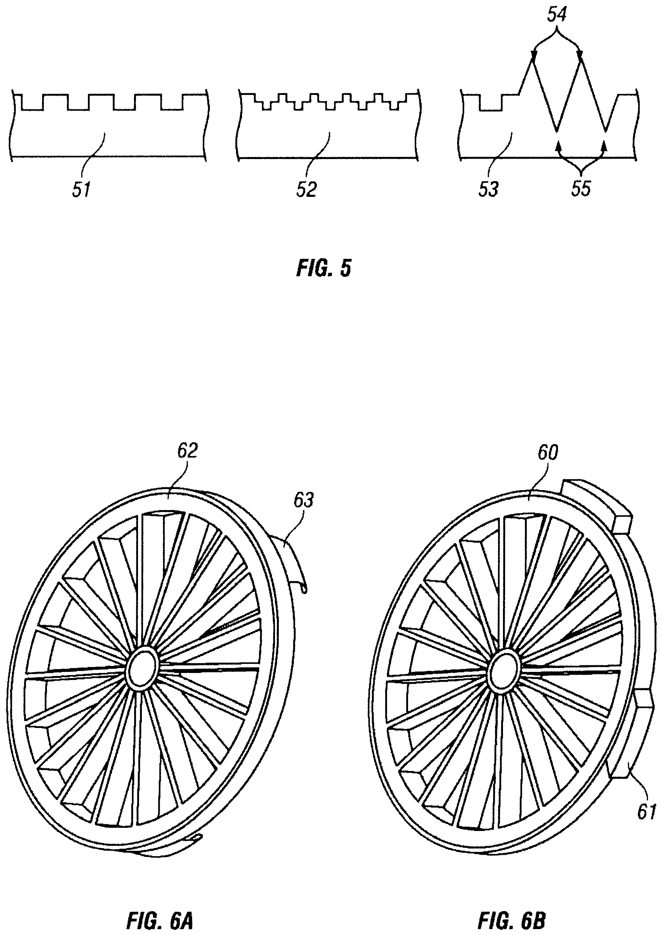

In certain embodiments, sealing is accomplished using intermeshing surfaces 38 and 39 on the axial faces of seal plates 32 and 36. The intermeshing surfaces 38 and 39 are configured to create a tortuous flow path from the pressurized inner portion of spiral elements 10 and 10' externally into a space between spiral elements 10 and 10' and cylindrical housing 21. An example of a tortuous flow path can be appreciated by viewing the interface of adjacent seal plates 40 and 49 as shown in detail sections 4A and 4B of Fig. 4. The length, nature and resistance to flow of a tortuous flow path derive from the profile of the texture of the axial faces of seal plates 32 and 36 that forms a seal interface. Fig. 5 shows examples of texture profiles 51-53 used to form seal interfaces according to certain aspects of the invention. In one example, seal interface 51 comprises intermeshing teeth that are depicted as generally square in form. It will be appreciated that the teeth and hollows between teeth may have various shapes and that edges can be rounded and can have varying depths and widths as desired. The shapes of the teeth, peaks, valleys may be selected to have a shape that is triangular, conical, frusto-conical, or any other suitable shape. Differences in widths, heights and shapes may be introduced at various points on the surfaces of seal plates for registration purposes. Registration features may be provided on complementary surfaces that assist in alignment of the seal plates during assembly; registration features may be created using any combination of widths, heights and shapes and such features may operate to ease and/or urge the seal plates into alignment.

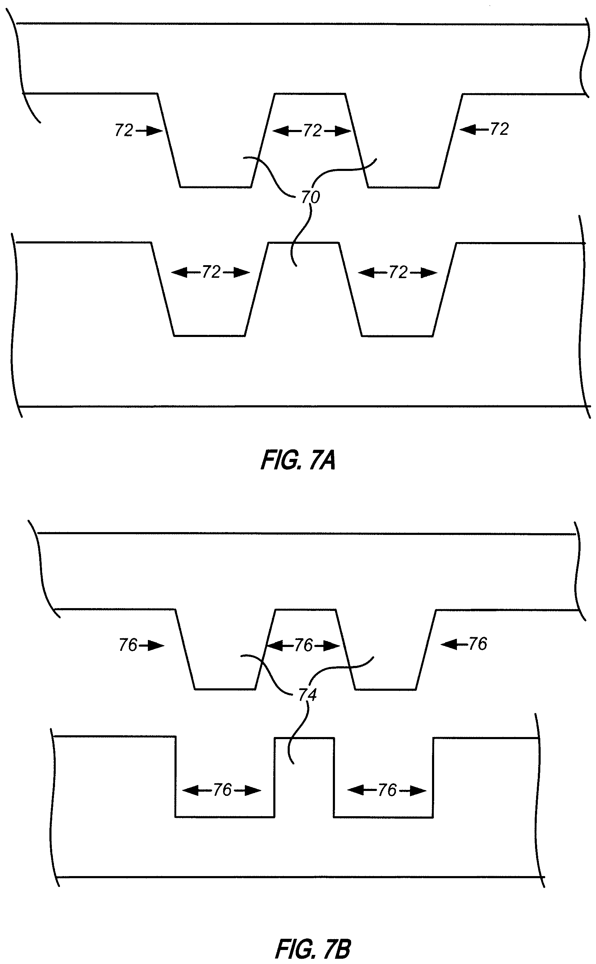

Figs. 7A and 7B depict examples of interfaces that can ease engagement of surfaces 38 and 39 during assembly of the filtration system. Fig. 7A shows a profile in which the protrusions, peaks or teeth 70 have a trapezoidal cross-section that engage with depressions, valleys or troughs 72 that have a similar trapezoidal profile. The tops of the valleys 72 have greater widths than the tops of peaks 70 and the sloped sides of the peaks 70 and valleys 72 permit the seal surfaces to engage with ease and slide into tight engagement. Fig. 7B shows another profile in which trapezoidal peaks 74 engage within rectangular valleys 76. The profile of 7B can reduce production complexity while retaining the ease of engagement. However, some tightness of fit may be sacrificed but a tortuous path for fluid flow remains and seal quality can approach that of the profile shown in Fig. 7A when sufficient peaks 74 and troughs 76 are used. In one example, two peaks 70 provide sufficiently tortuous paths for fluid flow to provide a suitable seal. While the examples depict peaks 70 and 74 and troughs 72 having a profile that is an isosceles trapezoid, the base angles of the trapezoid need not be identical. In some embodiments, the corners of certain of the peaks 70 and 74 and/or troughs 72 and 76 can be rounded to reduce scratching, to ease engagement and for other reasons.

In another example shown in Fig. 5, intermeshing surface 52 is formed from complementary stepped surfaces on the axial faces 38 and 39 of adjacent seal plates 32 and 36. Fluid passing through this interface must follow a more labyrinthine path that includes more turns, for example, than intermeshing surface 51. In yet another example, intermeshing surface 53 may be provided with registration features 54 and 55 that permit self alignment of seal plates 32 and 36. The tortuous path can be configured by designing the interface to accommodate the fluids encountered in specific applications. More particularly, an interface design may be selected based on operating temperature, operating pressure, flow rate, particulate content and leakage tolerance. Other factors may include materials selected for manufacturing seal plate, surface treatments, as well as manufacture and assembly constraints, and so on.

As the tortuous flow path is made more labyrinthine, the resistance to flow through the seal is typically increased. Thus, flow from inside the spiral membrane adjacent elements 10 and 10' to the space surrounding the spiral membrane elements 10 and 10' decreases, thereby providing improved sealing of the spiral membrane elements 10 and 10' at the point of their coupling. A labyrinth may be created using a tortuous path that has multiple turns, corners, steps, and so on. For example, an intermeshed contact can be formed using complementary toothed and/or stepped surfaces of the spiral membrane element and the adjacent spiral membrane element. The stepped profiles may be formed with right angled edges for one or more steps or teeth and/or the profiles may be v-shaped in form. It will be appreciated that this inside to outside flow, or "leakage," need not be zero. In fact it is often desirable for this flow to have some minimum value to prevent stagnation within the tortuous path and/or the space surrounding elements 10 and 10', and to permit air removal during startup operations. Conventional systems achieve such bleeding by providing, in the seal plate, features such as holes or grooves to provide a controlled flow path around the sealing element itself. Certain embodiments of the present invention achieve controlled leakage through the design of the tortuous path provided by the intermeshed contact surfaces 38 and 39.

Typically, the fluid flow design enabled by the present invention can eliminate or reduce the need for elastomeric sealing materials used at the axial face 200 of the seal plate 11 and typically reduces the number of radial seals 25 required for each component within a housing 21. Most conventional filtration systems contain as many as 8 individual elements within a single housing 21, with a commensurate number of radial seals 25 added for each element. The reduction in seals 25 directly contacting the wall of an enclosure 21 can lead to a significant reduction in drag force within the filtration system. Moreover, the removal of a significant portion of the axial seals 25 can ease loading and unloading of the spiral elements 10 and 10'. Specifically, an entry radial seal 25 can be provided in a manner that permits the seal plate 11 to move easily in either direction along the axis of the housing 21, thereby facilitating installation and maintenance of filtration elements 10 in spiral membrane filtration systems. These advantages are multiplied as the diameter of the enclosure 21 and spiral elements 10 increases.

Referring again to Fig.4, certain embodiments provide raised surfaces on the periphery of seal plate 40 that center spiral filtration element 10 within enclosure 21 while maintaining low drag forces. In the example depicted, seal plate 40 comprises raised concentric surfaces 44 (five shown) on the outer hub surface of the seal plate 40. These raised surfaces 44 may be sufficiently raised to provide a close fit with inner surface 42 of housing 21, thereby providing the center axis of the spiral element in substantial alignment with the center line of the housing. In embodiments having cylindrical housing 21 and seal plates 40, raised surfaces 44 can maintain housing 21 and seal plate 40 in substantial coaxial alignment. Surface contact area between raised surfaces 44 and the wall 42 of housing 21 is typically limited to reduce frictional drag, particularly during insertion and removal of spiral elements 10 from housing 21. Moreover, the number of raised surfaces 44 can be limited, but typically at least three raised surfaces 44 are provided to ensure that the element is adequately centered.

In certain embodiments, seal plates 40 and 49 optionally comprise a locking or latching mechanism to keep adjacent spiral elements 10 and 10' in close contact, thereby optimizing the seal provided by the labyrinthine interface between seal plates 40 and 49. Section 4A of Fig. 4 depicts in cross-sectional view, a pair of spiral elements 40, 49 that latch and section 4B of the drawing shows a cross-section of spiral elements 40, 49 that are not latched. An element-to-element latching mechanism as shown in Fig. 4A may be provided on/in the seal plates 40, 49 to limit the ability of spiral element 10, 10' to shift with respect to one another during startup conditions; such shifts can damage and/or create other problems with internal seals which connect the center core of the filtrations elements 10,10'.

In one embodiment, seal plate 49 comprises a latch, pawl, hook or other extension 47 on or near an outer surface of seal plate 49, while seal plate 40 comprises a receiving depression, an eye or other catch 470 on or near an outer surface of seal plate 40. As the pair of seal plates 40, 49 is brought together, one plate 40 or 49 can be rotated to align latching elements 47 and 470 and/or to align and orient the raised surfaces 44. In the example shown in Fig. 4, a latching pawl 47 fits into a receiving groove 470. In some embodiments, an alternative latching element (not shown) or latching pawl 47 may be configured to rise over a raised surface 471 and latch on the back side of raised surface 471. Latching mechanism 46 typically operates automatically without the intervention of the surrounding wall 42 of housing 21 and spiral elements 10 and 10' can be joined together before insertion into the housing 21. Once inserted into housing 21, the latching mechanism is locked in place by the proximity of the walls of the housing. The locking mechanism can be unlatched by moving the joined pair of elements 10 and 10' outside of the housing and unlatching the mechanism. For example, latching extension can be raised from the grooved depression 470 by use of a blade or tool to provide outward force to a slot behind the locking pawl. Numerous alternative latching mechanisms are known in the art and can be used as appropriate or necessary.

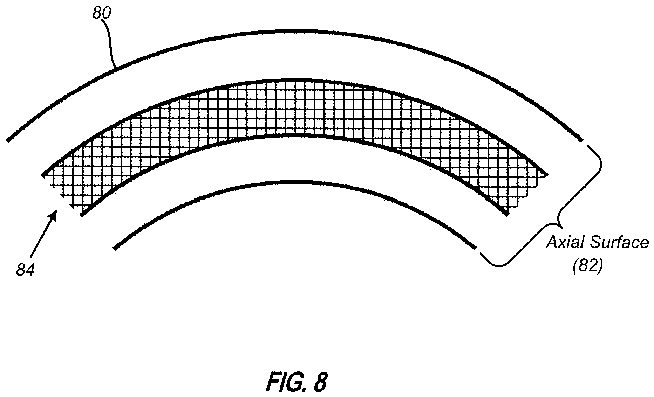

Fig. 8 is a detail view showing a portion of a seal plate 11 according to certain aspects of the invention. In the simplified example, a band of texture 84 is provided around the axial surface 82 of the seal plate 80. The axial surface 82 may be provided on a rim portion of seal plate 11 (see Fig. 1) and is typically formed coincident with a plane that is perpendicular to the axis of seal plate 11. The textured band 84 may be formed on the axial surface 82 by molding, machining, carving, stamping, printing, branding, cutting (including laser cutting), etching, bonding a strip of interface material to axial surface 82, or by any other means suitable for the material used to manufacture seal plate 11. The textured band typically comprises a pattern that intermeshes with a complementary pattern on another seal plate 11 of an adjacent filtration element. Adjacent filtration elements can be coupled and/or sealed by aligning their respective seal plates and closing the gap between the pair of seal plates 11 until the textured bands 84 of the seal plates 11 intermesh. As described herein, certain patterns and shapes can assist in alignment of the opposing seal plates 11. The textured band can extend across some or all of the axial surface 82.

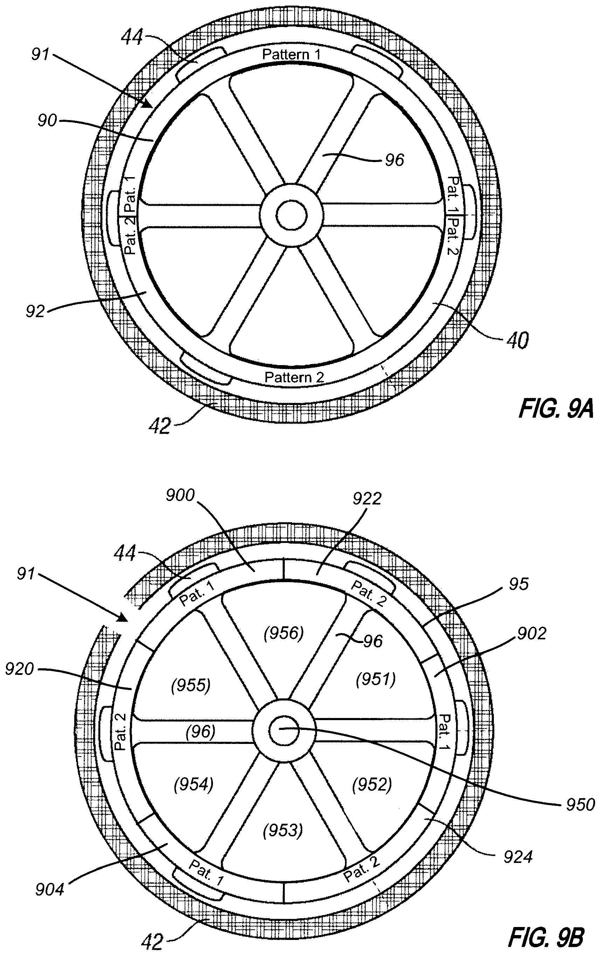

Fig. 9A illustrates examples of an arrangement of complementary patterns provided on a seal plate 91. The patterns maybe arranged to permit a single type of seal plate to serve on either end of a filtration element. As described herein, a tight seal can be formed when complementary patterns provided on an axial face of the seal plate 91 are aligned and mesh. The patterns mesh, for example, when trapezoidal peaks are aligned with trapezoidal valleys. Certain embodiments employ pairs of seal plates 91 that mutually complementary patterns. In certain embodiments, complementary pairs of patterns are arranged symmetrically on an axial face of seal ring 91, thereby providing a single hermaphroditic seal plate that can mate with an identical copy of itself by rotating the seal plates until complementary patterns align around the entire axial surface. Fig. 9A depicts a basic example that provides a first pattern on half of the axial surface 90 and a second pattern that is the complement of the first pattern on the other half 92 of the axial face of seal plate 91. Fig. 9B illustrates another example, in which 6 channels 951-956 are provided between rim 95 and central channel 950 (defined by spokes, supports or standoffs such as at element 96). In this example, two patterns are alternated around the axial surface, with transitions occurring coincident with a center of one of the channels 951-956. In the example, a first pattern 900, 902 and 904 alternates a complementary pattern 920, 922, 924. Three different patterns and their complements can be used in this example, if arranged suitably. Certain embodiments take advantage of the indexing capabilities of such properties to ensure alignment of channels 951-956, standoffs 96 and latches or spacers 44 and other features. Indexing can also be used to offset spacers 44 and other features.

### Additional Descriptions of Certain Aspects of the Invention

The foregoing descriptions of the invention are intended to be illustrative and not limiting. Certain additional aspects and features of the invention are further set forth below, and can be obtained using the functionalities and components described in more detail above, as will be appreciated by those skilled in the art after being taught by the present disclosure.

The invention provides systems for sealing a spiral membrane element of a filtration system comprising a seal formed using a first seal plate for capping the spiral membrane element and having a substantially planar facing configured to engage a corresponding face of a second seal plate of an adjacent spiral membrane element. The faces of the first and second seal plates have complementary profiles that provide an intermeshed contact of the seal plates when the spiral membrane element is coupled to the adjacent spiral membrane element. The intermeshed contact creates a tortuous flow path from inside the spiral membrane element to the outside of the spiral membrane element, thereby sealing the spiral membrane element at the point of coupling with the adjacent spiral membrane element.

In some of these embodiments, the intermeshed contact is formed by complementary stepped surfaces of the spiral membrane element and the adjacent spiral membrane element. In some of these embodiments, the profiles are v-shaped. In some of these embodiments, the profiles are stepped, each step formed with a right angled edge. In some of these embodiments, plural spiral membrane elements are connected sequentially within a cylindrical housing. In some of these embodiments, the ends of the cylindrical housing are sealed with radial seals. In some of these embodiments, the radial seal is provided by an annular element installed in a groove of a seal plate. In some of these embodiments, the spiral membrane element is coupled to the adjacent spiral membrane element, and wherein the coupling is maintained by a latching mechanism. In some of these embodiments, the latching mechanism comprises a pawl that is provided on the spiral membrane element and a receiving groove provided on the adjacent spiral membrane element. In some of these embodiments, the latching mechanism is engaged before the spiral membrane element and the adjacent spiral membrane element are inserted into the cylindrical housing. In some of these embodiments, the cylindrical housing prevents disengagement of the latching mechanism while the spiral membrane element and the adjacent spiral membrane element remain within the cylindrical housing.

The system of the invention comprises a seal plate operative to seal a spiral membrane element of a filtration system comprising a rim supported around a central channel and defining a second channel located between the central channel and the second channel. The rim has an axial surface substantially aligned with a plane perpendicular to an axis of the central channel. In certain embodiments, a portion of the axial surface has a texture. The texture having a pattern that is complementary to the texture of a portion of a corresponding axial surface of a second seal plate. The textures of the axial surfaces of the seal plate and the second seal plate are configured to intermesh when the seal plates are in contact. The intermeshed textures create a tortuous path between fluids in the second channel and a space external to the rim. The textures of the axial surfaces of the seal plate and the second seal plate comprise complementary patterns extending radially along the axial surfaces of the seal plate and the second seal plate. In certain embodiments, the complementary patterns comprise a substantially square stepped pattern. In certain embodiments, the complementary patterns comprise v-shaped patterns. In certain embodiments, the complementary patterns comprise valleys and trapezoidal peaks. In certain embodiments, the complementary patterns include a registration feature configured to ease alignment of the seal plate and the second seal plate.

Certain of these embodiments comprise a plurality of radial surfaces located at the periphery of the rim. In certain embodiments, the radial surfaces are configured to center the seal plate within a cylindrical enclosure. In certain embodiments, the seal plate is bonded to an inflow end of the spiral membrane element such that a portion of a fluid introduced through the second channel is filtered by the spiral membrane element and is thence conducted to the central channel. Certain of these embodiments comprise a latch operative to maintain the seal plate in close contact with the second seal plate. In certain embodiments, a portion of the latch is provided on a radial external surface of the rim. In certain embodiments, the latch comprises a pawl that is fixed to the radial external surface of the rim and configured to engage a receiving groove provided on a corresponding radial external surface of the second seal plate. In certain embodiments, the latch operates as a spacer configured to maintain the seal plate in substantial coaxial alignment with a cylindrical housing that encloses the spiral membrane element.

Certain embodiments of the invention comprise a cylindrical filtration core surrounding a collection channel that collects a filtrate from the core. Certain of these embodiments comprise a pair of seal plates bonded at opposite ends of the core. In certain embodiments, each seal plate comprises an annular rim having an axial surface coincident with a plane perpendicular to the annular rim's axis. In certain embodiments, each seal plate comprises a textured band provided ringing a portion of the axial surface and configured to intermesh with a corresponding textured band of another seal plate when the seal plates are in contact. In certain embodiments, the intermeshed textured bands create a labyrinth seal that substantially seals the core from a space external to the rim. In certain embodiments, the textured band of each seal plate includes a portion having a texture pattern that is configured to fit a complementary texture pattern provided on another seal plate. In certain embodiments, the textured band of each seal plate defines a plurality of areas that have pairs of complementary patterns arranged such that the textured band of each seal plate meshes with the textured band of an identical opposing seal plate on an adjacent filtration element, when the each seal plate and the opposing seal plate are in a predetermined alignment with one another.

Certain embodiments of the invention provide filtration systems comprising comprise an enclosure. Certain of these embodiments comprise a plurality of filtration elements connected end-to-end within the enclosure. In certain embodiments, each filtration element comprises a cylindrical filtration core surrounding a collection channel that collects a filtrate from the filtration core. In certain embodiments, each filtration element comprises a pair of seal plates. In certain embodiments, each of the pair of seal plates is bonded at different ends of the core. In certain embodiments, each seal plate has a rim coaxial with the collection channel. In certain embodiments, the rim has an axial surface substantially aligned with a plane perpendicular to an axis of the each seal plates. In certain embodiments, the pair of seal plates have textured patterns formed on their respective surfaces that are complementary and configured to intermesh with one another when the seal plates are in contact. In certain embodiments, the intermeshed textures create a tortuous path substantially sealing unfiltered fluid directed to the core from a space external to the rim.

The intermeshed textures comprise complementary patterns extending radially along the axial surfaces of the seal plates. In certain embodiments, the intermeshed textures comprise complementary patterns that include one or more of a stepped pattern and a v-shaped pattern. In certain embodiments, the intermeshed textures comprise one or more of a square valley, a square peak, a trapezoidal valley and a trapezoidal peak. In certain embodiments, the intermeshed textures comprise one or more registration features that ease alignment of adjacent filtration elements. Certain of these embodiments comprise a plurality of radial surfaces located at the periphery of the rims. In certain embodiments, the radial surfaces center the seal plate within the enclosure. Certain of these embodiments comprise a latch operative to maintain adjacent filtration elements in close contact with each other. In certain embodiments, the latch is embodied in one or more of adjacent seal plates.

The patterned textures extend radially along the axial surfaces of the seal plates. In certain embodiments, the patterned texture of each seal plate includes two complementary patterns that are arranged symmetrically on the each seal plate such that each of the two patterns aligns with its complement on the other seal plate when the pair of seal plates are in a desired alignment. In certain embodiments, the patterns comprise one or more of a stepped pattern and a v-shaped pattern. In certain embodiments, the patterns comprise one or more of a rectangular pattern and a trapezoidal pattern. In certain embodiments, the complementary patterns comprise a registration feature that facilitates the desired alignment of adjacent seal plates. Certain of these embodiments comprise a plurality of radial surfaces located at the periphery of the rims, wherein the radial surfaces center the seal plate within the enclosure. Certain of these embodiments comprise a latch operative to maintain adjacent filtration elements in close contact with each other, wherein the latch is embodied in one or more of adjacent seal plates.

Although the present invention has been described with reference to specific exemplary embodiments, the specification and drawings are to be regarded in an illustrative rather than a restrictive sense.

## Claims

1. A system of two spiral membrane elements for a filtration system, one spiral element comprising a first seal plate, the other spiral element comprising a second seal plate forming a pair of coupled seal plates (11, 32, 36, 40, 49) which is operative to seal the spiral membrane elements (10, 10'), each of the first and second seal plate comprising a rim (95) supported around a central channel and defining a second channel located between the central channel (950) and the rim (95), wherein:
the rim (95) has an axial surface substantially aligned with a plane perpendicular to an axis of the central channel (950);
a portion of the axial surface of the first seal plate (32, 40) has a texture, the texture having a pattern that is complementary to the texture pattern of a portion of a corresponding axial surface of a second seal plate (36, 49);
wherein the textures of the axial surfaces of the first seal plate (32, 40) and the second seal plate (36, 49) extending radially along the axial surfaces and are configured to intermesh when the seal plates (32, 36, 40, 49) are in contact and the textures of the axial surfaces of the first seal plate (32, 40) and the second seal plate (36, 49) comprise complementary patterns extending radially along the axial surfaces of the first seal plate (32, 40) and the second seal plate (36, 49); and **characterised in that** the intermeshed textures create a tortuous path between fluids in the second channel and a space external to the rim (95).

2. The system of claim 1, wherein the complementary patterns comprise a substantially square stepped pattern; or wherein the complementary patterns comprise v-shaped patterns; or wherein the complementary patterns comprise valleys and trapezoidal peaks; or wherein the complementary patterns include a registration feature configured to ease alignment of the first seal plate (32, 40) and the second seal plate (36, 49).

3. The system of claim 1, further comprising a plurality of radial surfaces located at the periphery of the rim (95), wherein the radial surfaces are configured to center the first seal plate (32, 40) within a cylindrical enclosure.

4. The system of claim 1, wherein the first seal plate (32, 40) is bonded to an inflow end of the spiral membrane element (10, 10') such that a portion of a fluid introduced through the second channel is filtered by the spiral membrane element (10, 10') and is thence conducted to the central channel (950).

5. The system of claim 4, further comprising a latch (47) operative to maintain the first seal plate (32, 40) in close contact with the second seal plate (36, 49), wherein a portion of the latch (47) is provided on a radial external surface of the rim (95).

6. The system of claim 5, wherein the latch (47) comprises a pawl that is fixed to the radial external surface of the rim (95) and configured to engage a receiving groove provided on a corresponding radial external surface of the second seal plate (36, 49).

7. The system of claim 6, wherein the latch operates as a spacer configured to maintain the first seal plate (32, 40) in substantial coaxial alignment with a cylindrical housing that encloses the spiral membrane element (10, 10').

## Patentansprüche

1. System zweier Spiralmembranelemente für ein Filtrationssystem, wobei ein Spiralelement eine erste Dichtungsplatte umfasst, das andere Spiralelement eine zweite Dichtungsplatte umfasst, die ein Paar verbundener Dichtungsplatten (11, 32, 36, 40, 49) bilden, das zum Abdichten der Spiralmembranelemente (10, 10') wirksam ist, wobei die erste und die zweite Dichtungsplatte jeweils einen Rand (95) umfassen, der um einen zentralen Kanal herum abgestützt ist und einen zweiten Kanal definiert, der zwischen dem zentralen Kanal (950) und dem Rand (95) angeordnet ist, wobei:
der Rand (95) eine axiale Fläche aufweist, die im Wesentlichen mit einer Ebene senkrecht zu einer Achse des zentralen Kanals (950) fluchtet;
ein Abschnitt der axialen Fläche der ersten Dichtungsplatte (32, 40) eine Textur aufweist, wobei die Textur ein Muster aufweist, das komplementär zum Texturmuster eines Abschnitts einer korrespondierenden axialen Fläche einer zweiten Dichtungsplatte (36, 49) ist;
wobei die Texturen der axialen Flächen der ersten Dichtungsplatte (32, 40) und der zweiten Dichtungsplatte (36, 49) sich radial entlang der axialen Flächen erstrecken und zum Ineinandergreifen konfiguriert sind, wenn die Dichtungsplatten (32, 36, 40, 49) in Berührung stehen, und die Texturen der axialen Flächen der ersten Dichtungsplatte (32, 40) und der zweiten Dichtungsplatte (36, 49) komplementäre Muster aufweisen, die sich radial entlang der axialen Flächen der ersten Dichtungsplatte (32, 40) und der zweiten Dichtungsplatte (36, 49) erstrecken; und **dadurch gekennzeichnet ist, dass**
die ineinandergreifenden Texturen einen gewundenen Weg zwischen Flüssigkeiten im zweiten Kanal und einem Raum außerhalb des Rands (95) erzeugen.

2. System nach Anspruch 1, wobei die komplementären Muster ein im Wesentlichen quadratisches Stufenmuster umfassen; oder wobei die komplementären Muster V-förmige Muster umfassen; oder wobei die komplementären Muster Täler und trapezförmige Spitzen umfassen; oder wobei die komplementären Muster ein Ausrichtmerkmal umfassen, das zum Erleichtern der Ausrichtung der ersten Dichtungsplatte (32, 40) und der zweiten Dichtungsplatte (36, 49) konfiguriert ist.

3. System nach Anspruch 1, ferner umfassend eine Vielzahl von radialen Flächen, die am Umfang des Rands (95) angeordnet sind, wobei die radialen Flächen zum Zentrieren der erste Dichtungsplatte (32, 40) in einer zylindrischen Umhüllung konfiguriert sind.

4. System nach Anspruch 1, wobei die erste Dichtungsplatte (32, 40) mit einem Eintrittsende des Spiralmembranelements (10, 10') derart verbunden ist, dass ein Teil eines durch den zweiten Kanal eingeleiteten Fluids durch das Spiralmembranelement (10, 10') gefiltert wird und von dort zum zentralen Kanal (950) geleitet wird.

5. System nach Anspruch 4, ferner umfassend eine Verriegelung (47), die dazu dient, die erste Dichtungsplatte (32, 40) in enger Berührung mit der zweiten Dichtungsplatte (36, 49) zu halten, wobei ein Bereich der Verriegelung (47) auf einer radialen Außenfläche des Rands (95) vorgesehen ist.

6. System nach Anspruch 5, wobei die Verriegelung (47) eine Klinke umfasst, die an der radialen Außenfläche des Rands (95) befestigt ist und zum Eingreifen in eine Aufnahmenut konfiguriert ist, die an einer korrespondierenden radialen Außenfläche der zweiten Dichtungsplatte (36, 49) vorgesehen ist.

7. System nach Anspruch 6, wobei die Verriegelung als Abstandshalter wirkt, der zum im Wesentlichen koaxialen Ausrichten der ersten Dichtungsplatte (32, 40) zu einem zylindrischen Gehäuse, welches das Spiralmembranelement (10, 10') umgibt, konfiguriert ist.

## Revendications

1. Système de deux éléments membranaires en spirale pour un système de filtration, un élément en spirale comprenant une première plaque d'étanchéité, l'autre élément en spirale comprenant une deuxième plaque d'étanchéité formant une paire de plaques d'étanchéité couplées (11, 32, 36, 40, 49) qui peut fonctionner pour assurer l'étanchéité des éléments membranaires en spirale (10, 10'), chacune des première et deuxième plaques d'étanchéité comprend une jante (95) supportée autour d'un canal central et définissant un deuxième canal situé entre le canal central (950) et la jante (95), dans lequel :
la jante (95) a une surface axiale sensiblement alignée avec un plan perpendiculaire à un axe du canal central (950) ;
une partie de la surface axiale de la première plaque d'étanchéité (32, 40) a une texture, la texture ayant un motif qui est complémentaire du motif de texture d'une partie d'une surface axiale correspondante d'une deuxième plaque d'étanchéité (36, 49) ;
dans lequel les textures des surfaces axiales de la première plaque d'étanchéité (32, 40) et de la deuxième plaque d'étanchéité (36, 49) s'étendent radialement le long des surfaces axiales et sont configurées pour s'imbriquer lorsque les plaques d'étanchéité (32, 36, 40, 49) sont en contact et les textures des surfaces axiales de la première plaque d'étanchéité (32, 40) et de la deuxième plaque d'étanchéité (36, 49) comprennent des motifs complémentaires s'étendant radialement le long des surfaces axiales de la première plaque d'étanchéité (32, 40) et de la deuxième plaque d'étanchéité (36, 49) ; et
**caractérisé en ce que**
les textures imbriquées créent un chemin tortueux entre des fluides dans le deuxième canal et un espace externe à la jante (95).

2. Système de la revendication 1, dans lequel les motifs complémentaires comprennent un motif étagé sensiblement carré ; ou dans lequel les motifs complémentaires comprennent des motifs en forme de v ; ou dans lequel les motifs complémentaires comprennent des creux et des pics trapézoïdaux ; ou dans lequel les motifs complémentaires comportent un élément d'alignement configuré pour faciliter l'alignement de la première plaque d'étanchéité (32, 40) et de la deuxième plaque d'étanchéité (36, 49).

3. Système de la revendication 1, comprenant en outre une pluralité de surfaces radiales situées à la périphérie de la jante (95), dans lequel les surfaces radiales sont configurées pour centrer la première plaque d'étanchéité (32, 40) dans une enceinte cylindrique.

4. Système de la revendication 1, dans lequel la première plaque d'étanchéité (32, 40) est liée à une extrémité d'entrée d'écoulement de l'élément membranaire en spirale (10, 10') de sorte qu'une partie d'un fluide introduit à travers le deuxième canal soit filtré par l'élément membranaire en spirale (10, 10') et est ensuite conduit vers le canal central (950).

5. Système de la revendication 4, comprenant en outre un verrou (47) pouvant fonctionner pour maintenir la première plaque d'étanchéité (32, 40) en contact étroit avec la deuxième plaque d'étanchéité (36, 49), dans lequel une partie du verrou (47) est prévue sur une surface externe radiale de la jante (95).

6. Système de la revendication 5, dans lequel le verrou (47) comprend un cliquet qui est fixé à la surface externe radiale de la jante (95) et configuré pour s'engager avec une rainure de réception prévue sur une surface externe radiale correspondante de la deuxième plaque d'étanchéité (36, 49).

7. Système de la revendication 6, dans lequel le verrou fonctionne en tant qu'entretoise configurée pour maintenir la première plaque d'étanchéité (32, 40) dans un alignement sensiblement coaxial avec un boîtier cylindrique qui enferme l'élément membranaire en spirale (10, 10').
